# FASCICULE DE BREVET EUROPEEN

(11) **EP 3 227 075 B1**
(45) Date de publication et mention de la délivrance du brevet: **26.07.2023**
(21) Numéro de dépôt: 15817964.8
(22) Date de dépôt: 03.12.2015
(51) Int. Cl.: B29C 33/10, B29C 70/48, B29C 43/36, B29C 33/00, B29C 70/46

(54) **DISPOSITIF DE MOULAGE POUR LA FABRICATION DE PIÈCES EN MATÉRIAU COMPOSITE À PARTIR DE RÉSINE POLYMÈRE LIQUIDE, AINSI QUE SON PROCÉDÉ DE FABRICATION**
FORMVORRICHTUNG ZUR HERSTELLUNG VON VERBUNDKOMPONENTEN UNTER VERWENDUNG VON FLÜSSIGPOLYMERHARZ UND VERFAHREN DAZU
MOULDING DEVICE AND METHOD FOR THE MANUFACTURE OF COMPOSITE COMPONENTS USING LIQUID POLYMER RESIN

(30) Priorité: 03.12.2014 FR 1461865
(43) Date de publication de la demande: 11.10.2017
(73) Titulaire: Arkema France, 92700 Colombes (FR); Institut de Soudure, 93420 Villepinte (FR)
(72) Inventeur: CAUCHOIS, Jean-Pierre, 67510 Obersteinbach (FR); GERARD, Pierre, 64230 Denguin (FR); FRANCOIS, Gilles, 57590 Porcelette (FR); TAILLEMITE, Sébastien, 92370 Chaville (FR); PERRIN, Henri, 57340 Brehain (FR)
(74) Mandataire: Arkema Patent
(86) Numéro de dépôt international: PCT/FR2015/053309
(87) Numéro de publication internationale: WO 2016/087788

(56) Documents cités:
- EP-A1- 0 294 768
- EP-A1- 0 792 903
- EP-A2- 0 384 653
- DE-A1-102013 102 044
- DE-A1-102013 207 668

## Description

### [Domaine d'invention]

L'invention concerne le domaine du moulage de pièce en matériau composite.

Plus particulièrement, l'invention concerne un dispositif de moulage pour la fabrication de pièces en matériau composite à partir de résines polymères liquides conformément à la revendication 1. L'invention concerne également un procédé de fabrication de pièces en matériau composite conformément à la revendication 15, mis en oeuvre par le dispositif de moulage, les pièces obtenues par ledit procédé ainsi que les résines utilisées pour la mise en oeuvre du procédé.

Le procédé selon l'invention permet l'injection de résines polymères en mono-composant ou en multi-composant. On désignera dans la suite par résine polymère une résine polymère avant polymérisation, et par résine polymérisée une résine polymère après polymérisation.

### [Art antérieur]

Certaines pièces ou certains ensembles de pièces tels que ceux précédemment cités sont parfois amenés à subir des contraintes mécaniques ou efforts mécaniques importants. De telles pièces sont dès lors très largement fabriquées à partir de matériaux composites.

Un matériau composite est un assemblage d'au moins deux composants non miscibles. Un effet de synergie est obtenu par un tel assemblage, de sorte que le matériau composite obtenu possède des propriétés notamment mécaniques et/ou thermiques que chacun des composants initiaux ne possède pas ou possède mais à un degré inférieur par rapport au matériau composite.

De plus, un matériau composite est constitué par au moins un matériau de renfort conférant audit matériau composite de bonnes propriétés mécaniques, notamment une bonne tenue aux efforts mécaniques subis par le matériau composite, et par un matériau de matrice, ou plus simplement matrice, formant une phase continue et assurant la cohésion dudit matériau composite. Parmi les différents types de composites utilisés dans l'industrie, les composites à matrices organiques sont les plus représentés. Dans le cas des composites à matrices organiques, le matériau de matrice est généralement un polymère. Ce polymère peut être soit un polymère thermodurcissable, soit un polymère thermoplastique.

La préparation du matériau composite s'effectue par un mélange du matériau de matrice et du matériau de renfort, ou par mouillage ou imprégnation du matériau de renfort par le matériau de matrice, puis par polymérisation du système obtenu. Le mélange de la matrice polymère, appelée résine dans la suite de la demande, et du renfort est réalisé dans un moule par injection de ladite résine dans ledit moule.

Les moules généralement utilisés dans l'industrie sont des moules avec un ou plusieurs évents permettant de garder l'équilibre de la pression à l'intérieur du moule. Cependant, un évent obturé peut entraîner des défauts sur la pièce finale obtenue après moulage. De plus, un évent laisse généralement une marque sur la pièce, il est donc nécessaire de positionner l'évent et/ou la pièce de sorte que cette marque soit la moins visible possible, ou qu'elle soit réalisée sur une partie de la pièce devant subir une transformation après le moulage.

Afin de pallier ces problèmes, des moules sans évents fonctionnant sous vide ont été conçus. Avant injection de la résine, le vide est fait dans le moule afin de permettre une imprégnation optimale du substrat par la résine, et d'obtenir des pièces en matériau composite possédant le moins de défauts ou d'imperfections possible

Le document DE 20 2012 104 148 décrit ainsi un outil de moulage formé de deux parties de formes complémentaires aptes à venir au contact l'une de l'autre et formant une cavité. La partie inférieure de l'outil de moulage comprend un conduit lié à une prise de vide et traversant la paroi de ladite partie inférieure. La partie supérieure est mobile notamment entre une position dite « ouverte » dans laquelle une extrémité du conduit débouche dans la cavité, le vide pouvant alors être fait dans ladite cavité, et une position dite « fermée » dans laquelle l'extrémité interne du conduit est bouchée par la partie supérieure. Des joints positionnés le long de la paroi de la partie supérieure de l'outil permettent d'assurer une bonne étanchéité entre la cavité et le conduit, et ainsi entre la cavité et le milieu extérieur. La partie inférieure de l'outil de moulage comprend une entrée d'injection par laquelle est injectée une résine lorsque le vide a été créé dans la cavité et que l'outil de moulage est en position fermée.

Cependant, un tel outil de moulage présente un coût important et son utilisation peut s'avérer complexe. Par ailleurs, le volume de la cavité diminue fortement entre la position ouverte de l'outil de moulage, et la position fermée. Cette importante diminution de volume est due au déplacement de la partie supérieure qui se rapproche de sa partie inférieure. Cette variation du volume s'accompagne d'une variation de pression au sein de la cavité, si bien que la pression lors de l'étape d'injection de la résine dans la cavité est supérieure à la pression lors de l'étape antérieure de création du vide dans ladite cavité. Cette différence de pression peut induire des défauts et/ou imperfections dans les pièces en matériau composite obtenues.

Par ailleurs, le volume permettant la réalisation du tirage du vide est faible, puisqu'il est déterminé par le volume du conduit compris dans la partie inférieure de l'outil de moulage. Or le diamètre du conduit ne peut pas avoir une dimension plus grande que l'espace situé entre les joints d'étanchéité prévus sur la partie supérieure de l'outil de moulage. Ainsi, le débit de tirage du vide est faible et le temps de moulage est élevé, rendant un tel outil de moulage inapproprié pour des applications industrielles où la cadence de production est soutenue.

Le document EP 0792903 décrit un moule et un procédé de moulage pour la fabrication de matériaux composite au moyen d'une résine polyimide et d'un matériau fibreux de renfort. Le moule comporte une partie supérieure et une partie inférieure destinées à être raccordées. La partie supérieure et inférieure délimitent une cavité apte à recevoir un renfort fibreux et une résine. La partie supérieure pénètre dans la partie inférieure de sorte que qu'il y a un mouvement de déplacement de cette partie pendant la fermeture du moule. La forme de la partie supérieure du moule est telle que cette partie peut se déplacer dans la partie inférieure. De plus le moule comprend un canal de tirage du vide situé au-dessus de la cavité et qui communique avec cette cavité.

Le document DE 10 2013 207668 décrit un dispositif de moulage pour la fabrication de matériau composite avec renfort fibreux. Le moule comporte deux parties destinées à être connectées et à délimiter une cavité apte à recevoir le renfort et la résine. Le dispositif de moulage comprend une pièce constituée par une tige qui se déplace dans le canal de la partie supérieure du moule. Le dispositif comporte également un canal d'évacuation de gaz qui est situé au-dessus de la cavité et qui communique avec elle. La tige a pour fonction de permettre de retirer la pièce moulée après ouverture du moule.

Le document EP0792903 décrit un moule et un procédé de moulage pour la fabrication de matériaux composite au moyen d'un résine polyimide et d'un matériau fibreux de renfort. Le moule comporte une partie supérieure et une partie inférieure destinées à être raccordées. Les parties supérieure et inferieure délimitent une cavité apte à recevoir le renfort fibreux et la résine. La partie supérieure pénètre dans la partie inférieure de sorte qu'il y a un mouvement de déplacement de cette partie pendant la fermeture du moule. La forme de la partie supérieure du moule est telle que cette partie peut se déplacer dans la partie inférieure. De plus, le moule comprend un canal de tirage du vide situé au-dessus de la cavité 1 et qui communique avec cette cavité.

L'invention a donc pour but de remédier aux inconvénients de l'art antérieur en proposant un dispositif de moulage pour la fabrication de pièce en matériau composite à base de résine polymère permettant d'obtenir des pièces sans défaut ou comportant un nombre de défauts et/ou d'imperfections faible. Le dispositif de moulage selon l'invention permet également une étape de tirage du vide rapide, avec un débit élevé. Un tel dispositif permet également de conserver un volume invariant de la cavité de moulage, ainsi qu'une variation de pression négligeable entre le tirage du vide et l'injection de la résine dans le dispositif de moulage.

### [Brève description de l'invention]

A cet effet, l'invention a pour objet un dispositif de moulage pour la fabrication de pièce en matériau composite structurée ou semi-structurée comprenant une résine polymère et un substrat fibreux, caractérisé en ce qu'il comprend :
- un moule comprenant un fond et une surface latérale,
- une partie mobile apte à se déplacer le long de la surface latérale du moule, comprenant une surface de compression formant avec le fond et la surface latérale dudit moule une cavité,
principalement caractérisé en ce que la partie mobile comprend un canal de tirage du vide débouchant dans une chambre située au-dessus de la cavité et communiquant avec ladite cavité

Le moule comprend une partie inférieure et une partie supérieure apte à venir au contact de ladite partie inférieure afin de fermer le moule.

La partie mobile comprend en outre un poinçon apte à se déplacer le long de la surface latérale du moule, et une tête d'injection, ladite tête d'injection étant munie d'une paroi définissant une colonne d'injection communiquant avec la cavité par une ouverture.

Le moule comprend en outre un piston comportant une partie inférieure munie d'une surface inférieure, une partie supérieure, et un évidement, ledit piston étant apte à se déplacer le long de la colonne d'injection entre au moins une première position dite position ouverte dans laquelle sa surface inférieure définit avec la paroi de la tête d'injection et l'ouverture, une portion inférieure de colonne d'injection, et au moins une deuxième position dans laquelle le piston obture l'ouverture de la colonne d'injection.

Selon un premier mode de réalisation,
- le canal de tirage du vide est constitué d'un premier canal traversant la paroi de la tête d'injection, et débouchant sur la chambre constituée de la portion inférieure de colonne d'injection,
- le canal de tirage du vide est également un canal d'injection de résine polymère,
- la tête d'injection comprend en outre un deuxième canal traversant la paroi de la tête d'injection, et permettant l'évacuation de la résine de la colonne,
- en position fermée, le piston forme au niveau de son évidement, avec la paroi de la tête d'injection, le premier canal, et le deuxième canal, un circuit de recirculation de la résine non injectée.

Selon un deuxième mode de réalisation, la partie mobile comprend en outre une collerette apte à se déplacer le long de la surface latérale du poinçon, entre au moins une première position dite ouverte dans laquelle la surface inférieure de la collerette définit avec la surface latérale du poinçon un espace de retrait communiquant avec la cavité par une ouverture, et au moins une deuxième position dite fermée dans laquelle la collerette obture ladite ouverture,
- l'espace de retrait comprend une rainure périphérique située dans le poinçon,
- le canal de tirage du vide est constitué d'un canal situé dans le poinçon et débouchant sur la chambre constituée de l'espace de retrait, ou sur la rainure périphérique dudit espace de retrait,
- la tête d'injection comprend en outre au moins un premier canal traversant sa paroi pour l'injection de la résine et au moins un deuxième canal traversant sa paroi pour l'évacuation de la résine de la tête d'injection,
- le premier canal et le deuxième canal forment, avec la surface inférieure du piston et l'ouverture de la colonne d'injection, un circuit de recirculation de la résine non injectée.

Selon un troisième mode de réalisation, la tête d'injection comprend en outre, dans sa paroi, au moins un premier canal inférieur pour l'injection de la résine et au moins un premier canal supérieur pour l'évacuation de la résine de ladite tête d'injection, lesdits premiers canaux inférieur et supérieur étant positionnés à l'aplomb l'un de l'autre et formant, avec l'évidement du piston et la paroi de la tête d'injection, au moins un circuit de recirculation de la résine non injectée,
- la tête d'injection comprend en outre, dans sa paroi, au moins un deuxième canal inférieur pour l'injection de la résine et au moins un deuxième canal supérieur pour l'évacuation de la résine de ladite tête d'injection, lesdits deuxièmes canaux inférieur et supérieur étant positionnés à l'aplomb l'un de l'autre et formant, avec l'évidement du piston et la paroi de la tête d'injection, au moins un circuit de recirculation de la résine non injectée,
- la tête d'injection comprend, dans sa paroi, n canaux inférieurs pour l'injection de la résine et m canaux supérieurs pour l'évacuation de la résine de la colonne d'injection, n étant supérieur ou égal à 2, m étant supérieur ou égal à 2, n étant égal ou différent de m, de manière à former n circuits de recirculation de la résine non injectée si n est inférieur à m, ou m circuits de recirculation lorsque m est inférieur à n,
- la partie supérieure de la colonne d'injection est constituée d'un espace destiné à être mis sous pression, et apte à accueillir la partie supérieure du piston, ledit piston étant hydraulique, afin de permettre le déplacement dudit piston le long de la colonne d'injection.

L'invention a également pour objet un procédé de fabrication de pièce en matériau composite structurée ou semi-structurée comprenant une résine polymère et un substrat fibreux, principalement caractérisé en ce qu'il est mis en oeuvre à l'aide d'un dispositif d'injection, et comprenant les étapes suivantes :
- a) positionnement du substrat fibreux dans la cavité,
- b) tirage du vide dans la cavité via le canal de tirage du vide situé dans la partie mobile du dispositif de moulage,
- c) imprégnation du substrat fibreux par injection d'une quantité prédéterminée de résine polymère dans la cavité via le canal d'injection de la résine, puis compression de ladite résine par la partie mobile du dispositif de moulage.

Selon une autre caractéristique, le procédé comprend en outre une étape de nettoyage de la résine non injectée dans la cavité, ladite étape de nettoyage pouvant être réalisée avant, pendant, ou après l'étape de compression de la résine.

Préalablement à l'étape d'injection de la résine, le procédé comprend une étape de fermeture de la chambre.

L'étape de fermeture de la chambre consiste en l'obturation de l'ouverture de la portion inférieure de la colonne d'injection par la surface inférieure du piston, par déplacement dudit piston en position fermée.

L'étape de fermeture de la chambre consiste en l'obturation de l'ouverture de l'espace de retrait par la surface inférieure de la collerette, par déplacement de ladite collerette en position fermée.

Le procédé permet l'injection en mono-composant de la résine polymère avec les trois modes de réalisation du dispositif de moulage et plus avantageusement avec les premiers et deuxièmes modes.

Le procédé permet l'injection en bi-composant de la résine polymère avec le troisième mode de réalisation du dispositif de moulage.

La divulgation concerne également une résine polymère liquide pour la mise en oeuvre du procédé de fabrication en mono-composant, choisie parmi les résines thermodurcissables polyesters, les résines thermodurcissables vinyl-esters, les résines thermodurcissables acryliques, les mélanges desdites résines thermodurcissables polyesters, vinyl-esters, et acryliques, les résines thermoplastiques acryliques, les résines thermoplastiques polyamides.

La divulgation concerne aussi une résine polymère liquide pour la mise en oeuvre du procédé de fabrication en bi-composant, choisie parmi les résines thermodurcissables polyesters, les résines thermodurcissables vinyl-esters, les résines thermodurcissables acryliques, les mélanges desdites résines thermodurcissables polyesters, vinyl-esters, et acryliques, les résines thermodurcissables polyuréthanes, les résines thermodurcissables époxydes, les résines thermoplastiques acryliques, les résines thermoplastiques polyamides.

La divulgation a également pour objet, une pièce composite structurée ou semi-structurée, obtenue par la mise en oeuvre du procédé de fabrication, ladite pièce étant utilisable dans le domaine de l'automobile, du transport routier comme par exemple pour les camions, le transport ferroviaire, maritime, et aéronautique, de l'éolien, du photovoltaïque, du solaire (thermique), du bâtiment, du génie civil, du mobilier et des équipements urbains, de la signalisation, des sports et loisirs.

Selon une caractéristique avantageuse, la pièce composite structurée ou semi-structurée obtenue est dite « net-shape » c'est-à-dire qu'elle ne comporte aucune carotte résiduelle de moulage et est utilisable après démoulage sans aucun traitement de finition.

### [Brève description des dessins]

D'autres avantages et caractéristiques de l'invention apparaîtront à la lecture de la description suivante donnée à titre d'exemple illustratif et non limitatif, en référence aux schémas du dispositif de moulage représentés par les Figures annexées :
- La Figure 1.1, une vue en coupe du dispositif de moulage lors de l'étape de tirage du vide, selon un premier mode de réalisation de l'invention.
- La Figure 1.2, une vue en coupe du dispositif de moulage lors de l'étape d'injection de la résine, selon un premier mode de réalisation de l'invention.
- La Figure 1.3, une vue en coupe du dispositif de moulage lors des étapes de nettoyage et de compression de la résine, selon un premier mode de réalisation de l'invention.
- La Figure 2.1, une vue en coupe du dispositif de moulage lors de l'étape de tirage du vide, selon un deuxième mode de réalisation de l'invention.
- La Figure 2.2, une vue en coupe du dispositif de moulage lors de l'étape de fermeture de la collerette, selon un deuxième mode de réalisation de l'invention.
- La Figure 2.3, une vue en coupe du dispositif de moulage lors de l'étape d'injection de la résine, selon un deuxième mode de réalisation de l'invention.
- La Figure 2.4, une vue en coupe du dispositif de moulage lors des étapes de nettoyage et de compression de la résine, selon un deuxième mode de réalisation de l'invention.
- La Figure 3.1, une vue en coupe du dispositif de moulage lors de l'étape de tirage du vide, selon un troisième mode de réalisation de l'invention.
- La Figure 3.2, une vue en coupe du dispositif de moulage lors de l'étape de fermeture de la collerette, selon un troisième mode de réalisation de l'invention.
- La Figure 3.3, une vue en coupe du dispositif de moulage lors de l'étape d'injection de la résine, selon un troisième mode de réalisation de l'invention.
- La Figure 3.4, une vue en coupe du dispositif de moulage lors des étapes de nettoyage et de compression de la résine, selon un troisième mode de réalisation de l'invention.
- La Figure 4, un schéma d'un système de renvoi d'angle.
- La Figure 5, un schéma de moyens de stockage de la résine.
- La Figure 6, un schéma de moyens de rétrécissement périphérique.

### [Description détaillée de l'invention]

Dans la description qui va suivre le dispositif de moulage selon l'invention est d'abord présenté de manière générale, puis le dispositif est décrit de manière plus détaillée à partir de trois modes de réalisation particuliers.

### DESCRIPTION GENERALE DU DISPOSITIF DE MOULAGE.

Le terme « monomère » tel qu'utilisé se rapporte à une molécule qui peut subir une polymérisation.

Le terme « polymérisation » tel qu'utilisé se rapporte au procédé de transformation d'un monomère ou d'un mélange de monomères en un polymère. Un oligomère est un polymère comprenant un faible nombre de monomères.

On entend par « injection multi-composant » l'injection d'une résine comprenant au moins deux composants, et dont lesdits composants ne sont mis en contact qu'à compter de l'étape d'injection de ladite résine dans un dispositif de moulage. Le présent document présente en particulier une injection bi-composant, c'est-à-dire l'injection d'une résine comprenant deux composants A et B, et dont lesdits composants ne sont mis en contact qu'à compter de l'étape d'injection de ladite résine dans un dispositif de moulage.

On entend par « injection mono-composant » l'injection d'une résine comprenant au moins deux composants, et dont lesdits composants sont mis en contact avant l'utilisation de la résine pour la mise en oeuvre d'un procédé de moulage. Le mélange ainsi formé est généralement conservé à basse température afin d'éviter qu'il ne polymérise avant son utilisation.

Le dispositif de moulage 1 comprend un moule 2 comportant une partie inférieure 3 et une partie supérieure 4 apte à venir au contact de ladite partie inférieure, de manière à venir en appui sur la partie fixe, afin de fermer le moule. Le moule 2 comporte un fond 6 prévu dans sa partie inférieure 3, destiné à recevoir le renfort fibreux. Le fond est limité en périphérie par la surface latérale 5 du moule.

Le dispositif de moulage comprend également une partie mobile 10 apte à se déplacer le long de la surface latérale 5 du moule. Ladite partie mobile comporte une surface de compression 14 formant, avec la paroi latérale 5 du moule et le fond 6 du moule, une cavité 7. La partie mobile comporte également un poinçon 11 apte à se déplacer le long de la surface latérale 5 du moule 1, ainsi qu'une tête d'injection 20 qui est, comprise à l'intérieur dudit poinçon, de manière à être entourée par ledit poinçon conformément à un premier mode de réalisation ou, à l'intérieur d'une collerette 40, logée dans le poinçon 11 selon le deuxième et troisième mode de réalisation décrits dans la suite.

La partie mobile 10 comprend également un canal de tirage du vide 23 ou 13, destiné à être lié à un dispositif de tirage du vide tel qu'une pompe à vide par exemple. Le canal débouche sur une chambre 25 ou 42 selon les modes de réalisation détaillés dans la suite. Cette chambre 25 ou 42 est située au-dessus de la cavité 7 et communique avec ladite cavité 7 par une ouverture 26 sur cette cavité.

Avantageusement, le dispositif de moulage 1 comprend en outre un système de mise en mouvement 60 de la partie mobile 10, en particulier du poinçon, permettant d'appliquer une pression constante sur ladite partie mobile afin de comprimer l'ensemble résine-substrat au fur et à mesure que la résine polymérise, pendant toute la durée de la réaction de polymérisation de ladite résine.

En effet, lors de la polymérisation de la résine 50, ultérieurement à l'imprégnation du substrat fibreux 51 par ladite résine, on observe un phénomène de retrait volumique de ladite résine. Le volume occupé par l'ensemble résine-substrat diminue au fur et à mesure du déroulement de la réaction de polymérisation de la résine, de sorte que le volume occupé par l'ensemble résine polymérisée-substrat obtenu en fin de réaction de polymérisation est inférieur au volume occupé par l'ensemble résine substrat initial. Le système décrit permet d'obtenir une imprégnation optimale du substrat fibreux par la résine, car il permet de conserver la partie mobile 10, et en particulier la surface de compression 14 de ladite partie mobile, au contact de l'ensemble résine-substrat, et de comprimer ledit ensemble résine-substrat pendant toute la durée de la réaction de polymérisation.

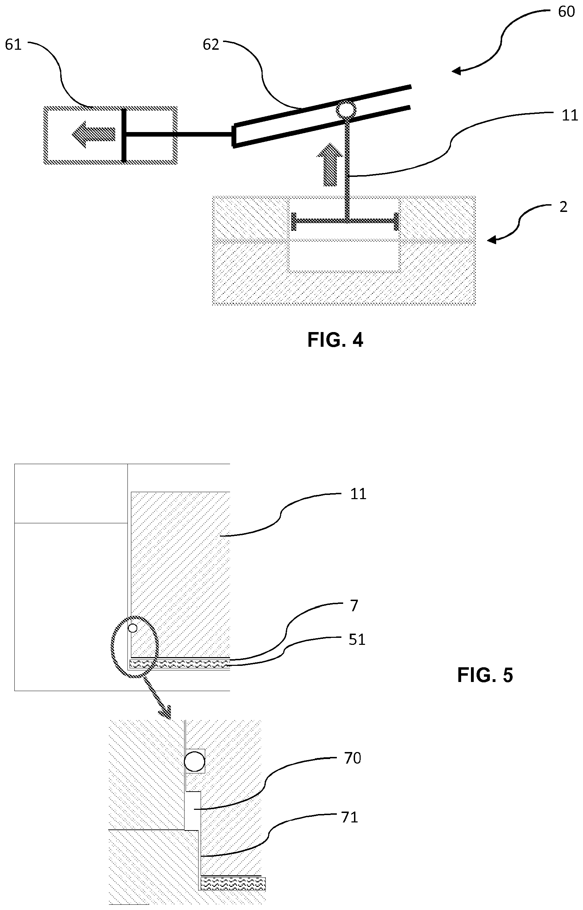

Avantageusement, le système comprend un système de renvoi d'angle 60 en translation, tel que représenté Figure 4. Le système comporte un vérin 61 appliquant un effort sur un renvoi d'angle en translation 62, ledit renvoi d'angle étant positionné de manière à être décalé d'un angle α par rapport à l'axe longitudinal du vérin. Le renvoi d'angle est lié au poinçon 11 et transmet l'effort au poinçon, permettant audit poinçon de décrire un mouvement de translation et de coulisser le long de la surface latérale 12 du moule.

Pour la mise en oeuvre du procédé de fabrication de pièce en matériau composite, il est nécessaire de pouvoir contrôler précisément le mouvement et le positionnement de la partie mobile 10, et en particulier du poinçon 11, durant toutes les étapes du procédé. Dans ce but, le vérin 61 est de préférence un vérin double action.

Le système 60 décrit permet avantageusement de réaliser le déplacement du poinçon 11 tout en compensant le retrait de la résine pendant la phase de polymérisation de ladite résine en appliquant une pression constante sur le poinçon. La pression exercée est déterminée notamment en fonction du type de résine et du volume de résine injectée. Ce système 60 permet d'obtenir une excellente homogénéité d'imprégnation du substrat fibreux par la résine, aboutissant à des pièces en matériau composite possédant de bonnes propriétés mécaniques ainsi qu'un bon aspect de surface, sans aspérités.

Le dispositif de moulage 1 comprend avantageusement des moyens de stockage permettant d'accueillir un surplus de résine injectée, lorsque le volume de résine injectée est supérieur au volume nécessaire à l'imprégnation optimale du substrat fibreux dans le moule. Les moyens de stockage, tels que représentés Figure 5, sont réalisés avantageusement par une chambre de réserve 70 apte à accueillir le surplus de résine injectée 50, ladite chambre de réserve étant reliée à la cavité 7 par un conduit 71. De cette manière, lorsque le volume de résine injectée est supérieur au volume nécessaire à l'imprégnation optimale du substrat fibreux, le surplus de résine emprunte le conduit jusqu'à venir se loger dans la chambre de réserve 70.

La présence de cette chambre de réserve 70 permet d'obtenir une fenêtre d'injection de résine plus large, puisqu'en cas de dépassement du volume d'imprégnation optimal, le surplus vient se loger dans la chambre de réserve. Ainsi, ces moyens de stockage permettent de garantir une imprégnation optimale du substrat fibreux et ainsi d'obtenir des pièces en matériau composite possédant de bonnes propriétés mécaniques.

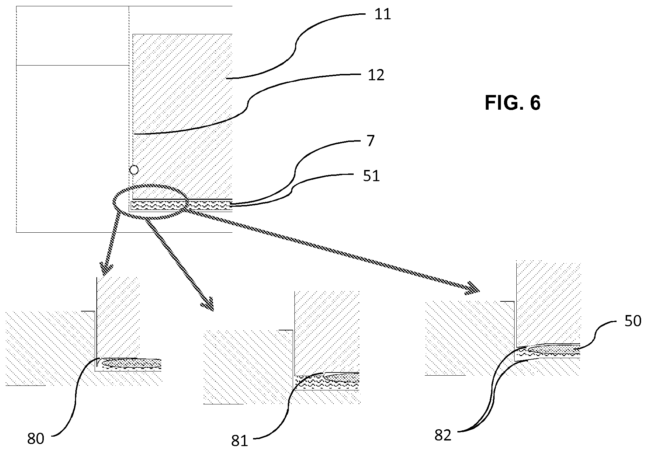

Le dispositif de moulage comprend avantageusement dans les trois modes de réalisation, des moyens de rétrécissement périphérique de la section de la pièce consistant en une variation de la géométrie de la surface inférieure du poinçon et/ou du fond du moule. Les moyens de rétrécissement tels que représentés Figure 6 sont situés à proximité de la surface latérale 12 du poinçon et/ou de la surface latérale 5 du moule et sont illustrés par trois variantes de réalisation portant les références 80, 81, et 82 sur la figure 6.

Dans la première variante, la surface inférieure 15 du poinçon est incurvée de manière à former un bec 80. Dans la deuxième variante, la surface inférieure du poinçon comporte une encoche 81. Dans la troisième variante de réalisation, la surface inférieure du poinçon et le fond 6 du moule comporte une rupture de pente, de manière à former un dévers.

De tels moyens (80, 81, 82) de rétrécissement périphérique de la section de la pièce permettent d'obtenir une bonne homogénéité d'imprégnation du substrat fibreux 51 par la résine 50 en évitant notamment la formation de zones sèches correspondant à des zones du substrat au niveau desquelles l'imprégnation dudit substrat par la résine est faible voire inexistante. Lesdits moyens (80, 81, 82) de rétrécissement périphérique de la section de la pièce permettent ainsi d'obtenir des pièces composites possédant de bonnes propriétés mécaniques.

### EXEMPLE DETAILLE DE TROIS MODES DE REALISATION DU DISPOSITIF DE MOULAGE ET DE LA FABRICATION DE PIECE EN MATERIAU COMPOSITE SELON CES TROIS MODES DE REALISATION.

On parlera dans la suite de tête d'injection « basse pression ou de tête d'injection « haute pression ». La tête d'injection dite «basse pression » est relative au premier et au deuxième mode de réalisation et la tête d'injection dite « haute pression » est relative au troisième mode de réalisation.

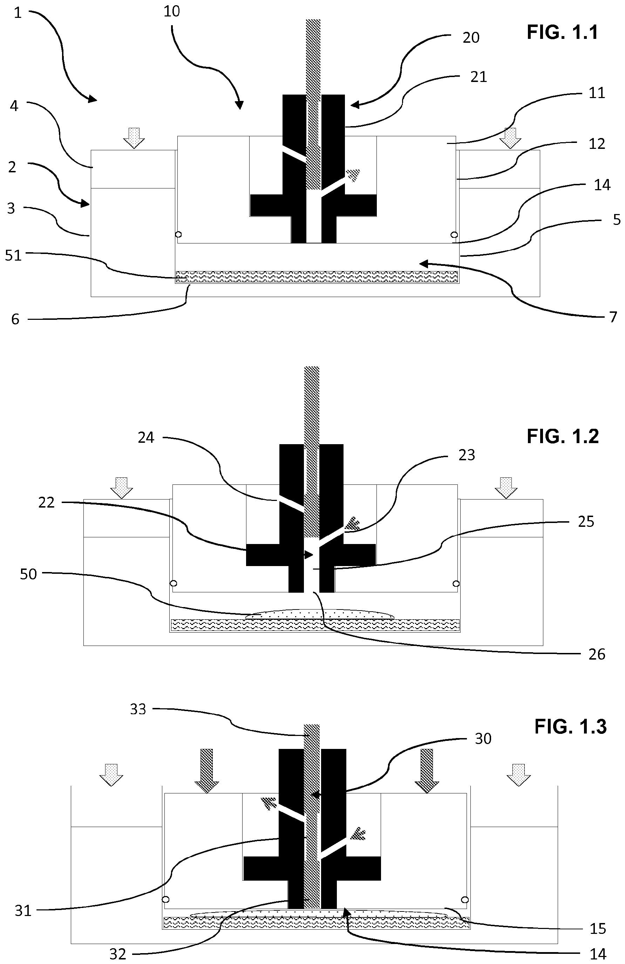

### Premier mode de réalisation illustré par les figures 1.1, 1.2 et 1.3

Le dispositif de moulage 1 comprend un moule 2 comportant une partie inférieure 3 et une partie supérieure 4 apte à venir au contact de ladite partie inférieure afin de fermer le moule. Le moule comporte un fond 6 prévu dans sa partie inférieure, ledit fond étant délimité en périphérie par la surface latérale 5 du moule.

Le dispositif de moulage permet l'injection de résine 50 en mono-composant. Il comprend, comme décrit précédemment, une partie mobile 10 apte à se déplacer le long de la surface latérale 5 du moule, un poinçon 11 disposé dans cette partie mobile, apte à se déplacer le long de la surface latérale du moule, et une tête d'injection 20 située dans le poinçon. La tête d'injection 20 est solidaire du poinçon, de sorte qu'un déplacement du poinçon entraine un déplacement correspondant de ladite tête d'injection. La surface inférieure 15 du poinçon constitue la surface de compression 14 formant, avec la paroi latérale 5 du moule et le fond 6 du moule, la cavité 7.

La tête d'injection 20 est une tête d'injection basse pression, utilisée notamment lorsque la pression d'injection de la résine 50 est comprise entre 1 bars et 20 bars. Elle comporte une paroi 21 délimitant une colonne d'injection 22 sensiblement verticale, ladite colonne d'injection étant notamment destinée à accueillir la résine polymère lors de la mise en oeuvre du procédé de fabrication de pièces en matériau composite selon l'invention.

La tête d'injection 20 comporte, dans sa paroi 21, un premier canal 23 et un deuxième canal 24 opposé au premier canal et situé à un niveau différent dudit premier canal par rapport à l'axe longitudinal de la tête d'injection. Le premier canal 23 est dit inférieur et le deuxième canal est dit supérieur. De plus, le premier canal 23 est apte à être relié à un dispositif de tirage du vide (non représenté), tel qu'une pompe à vide, pour le tirage du vide. Le premier canal 23 constitue également un canal d'entrée de la résine vers la colonne d'injection lors de l'injection de la résine. Ainsi, le premier canal 23 sert d'une part à tirer le vide dans la cavité, et d'autre part à injecter la résine dans la colonne d'injection. Cette double fonction est réalisée au moyen d'un système de commutation non représenté avantageusement prévu en amont de la tête d'injection.

La partie mobile 10 comporte un piston 30 apte à se déplacer dans la colonne d'injection 22 de la tête d'injection entre au moins une première position dite position ouverte, et au moins une deuxième position dite position fermée. En position ouverte, l'extrémité inférieure 32 du piston, la paroi 21 de la tête d'injection, et l'ouverture 26 de la colonne délimitent la chambre 25 qui correspond en pratique à une portion de la colonne 22 communiquant avec la cavité 7 par l'ouverture 26, et communiquant avec le premier canal 23. En position fermée, l'ouverture 26 de la colonne est obturée par l'extrémité inférieure 32 du piston.

Le piston 30 comporte un évidement 31 sur une partie de sa longueur, dont la dimension est variable et dépend des dimensions de la tête d'injection et du dispositif de moulage. La section du piston le long de l'évidement est réduite par rapport à la section du corps du piston. Ledit évidement délimite, avec la surface interne de la colonne d'injection, un circuit de recirculation de la résine polymère non injectée.

Le tirage du vide est effectué via le premier canal 23 prévu dans la paroi de la tête d'injection. Durant l'étape de tirage du vide, le piston 30 est en position ouverte, obturant le deuxième canal 24 sans obturer le premier canal, de sorte que le vide est réalisé dans la cavité 7 du moule, et dans la chambre constituée de la portion de colonne 25 de la tête d'injection 20, sans qu'il n'y ait de fuite d'air par la tête d'injection, en particulier par le deuxième canal 24.

La résine 50 est ensuite injectée dans la cavité 7 du moule via le premier canal 23 de la tête d'injection afin d'imprégner le substrat fibreux 51 placé préalablement dans ladite cavité. Durant l'injection de la résine, le piston 30 reste en position ouverte, de manière à obturer le deuxième canal 24 sans obturer le premier canal 23.

Lorsque la quantité de résine souhaitée a été injectée, le piston 30 est déplacé en position fermée afin d'obturer l'ouverture 26 de la portion de colonne d'injection. En position fermée, l'évidement 31 du piston forme avec la paroi 21 de la tête d'injection, le premier canal 23, et le deuxième canal 24, un circuit de recirculation de la résine non injectée. Lors de l'étape de nettoyage de la résine non injectée, la résine circule dans la colonne d'injection 22 via le premier canal 23, circule dans l'évidement 31 du poinçon, et sort de ladite colonne via le deuxième canal 24 permettant l'évacuation de la résine.

Après nettoyage du circuit de recirculation, le poinçon 11 se déplace le long de la surface latérale 5 du moule jusqu'à atteindre une position basse, variable selon le type et le volume de résine injectée, de manière à venir au contact de ladite résine injectée. La partie mobile 10 compresse la résine, permettant un étalement maximal de la résine sur toute la surface du substrat fibreux, ainsi qu'une imprégnation optimale du substrat fibreux par ladite résine. L'étape de nettoyage du circuit de recirculation de la résine peut être réalisée avant, pendant, ou après l'étape de compression. De préférence, les étapes de nettoyage et de compression ont lieu simultanément.

La mise en oeuvre du procédé de moulage par le dispositif de moulage décrit dans ce mode de réalisation permet d'obtenir un volume de la cavité 7 invariant entre l'étape de tirage du vide, et l'étape d'injection de la résine. En effet, le poinçon 11 est en position haute et reste en position haute lors de la mise en oeuvre des étapes de tirage du vide et d'injection de la résine. Une telle invariance de la cavité n'est pas constatée avec les dispositifs de moulage de l'art antérieur pour lesquels le volume de la cavité diminue et la pression dans la cavité augmente entre l'étape de tirage du vide et l'étape d'injection de la résine.

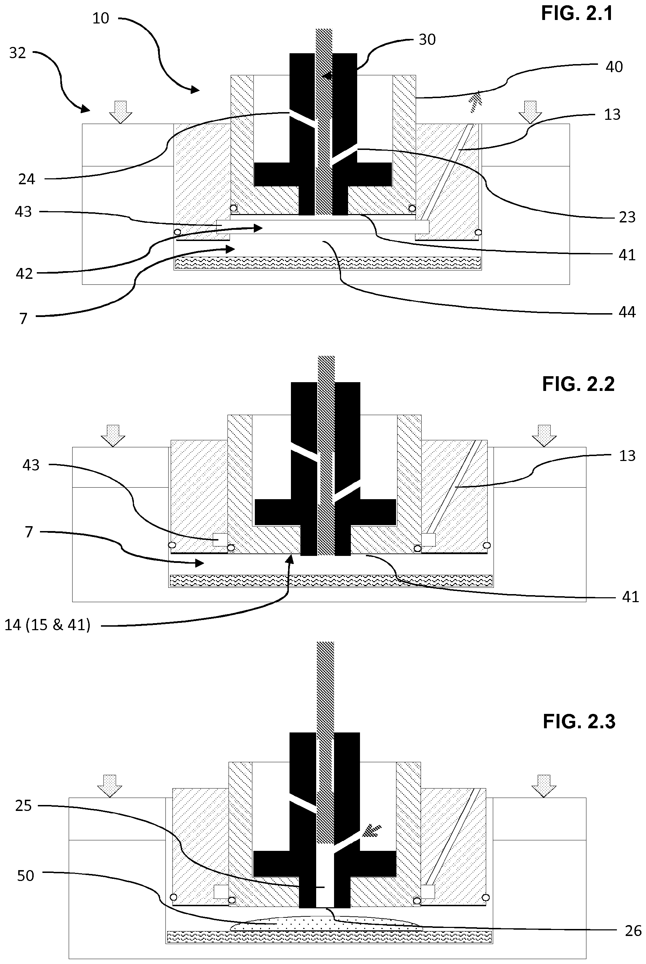

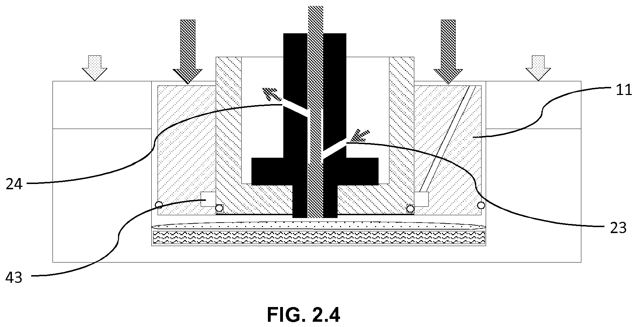

### Deuxième mode réalisation illustré par les figures 2.1, 2.2, 2.3, 2.4

Le dispositif de moulage comprend l'ensemble des éléments décrits dans le premier mode de réalisation précédent et une collerette 40. Le dispositif de moulage est destiné à l'injection de résine en mono-composant. En effet, dans le deuxième mode de réalisation, la partie mobile 10 dudit dispositif de moulage 1 comporte une collerette 40 dans laquelle est située une tête d'injection 20 « basse pression », de sorte que ladite collerette entoure ladite tête d'injection basse pression. La collerette 40 est apte à se déplacer le long de la surface latérale 12 du poinçon 11, et relativement à la surface latérale 5 du moule. En particulier la collerette est apte à se déplacer entre au moins une première position dite position ouverte et au moins une deuxième position dite position fermée.

Lorsque la collerette est en position ouverte, sa surface inférieure 41 délimite, avec la surface latérale 12 du poinçon et une ouverture 44, une chambre constituée d'un espace de retrait 42 communiquant avec la cavité 7 par ladite ouverture, et débouchant sur un canal 13.

L'espace de retrait 42 comporte une rainure périphérique 43 située sur la surface latérale 12 du poinçon. Ladite rainure est de préférence de section rectangulaire et s'étend sur toute la périphérie de la surface latérale du poinçon. La présence d'une rainure périphérique permet d'obtenir un volume de tirage du vide et un débit de tirage de vide très élevés, et ainsi un temps de tirage du vide fortement réduit comparativement aux dispositifs couramment utilisés dans l'industrie. Un tel dispositif de moulage permet notamment d'obtenir un temps de tirage du vide inférieur ou égal à 5 secondes pour une pièce de surface égale à 1 m², lorsque le temps de tirage obtenu dans l'industrie est généralement supérieur à 1 minute.

Le tirage du vide est effectué via le canal 13 situé dans le poinçon de la partie mobile 10 dont une extrémité débouche dans la chambre constituée de l'espace de retrait 42, en particulier dans la rainure périphérique 43 de l'espace de retrait communiquant avec la cavité 7, et l'autre extrémité débouche sur l'extérieur du poinçon et est raccordée à un système de tirage du vide tel qu'une pompe à vide par exemple.

Lors de l'étape de tirage du vide, le piston 30 est en position fermée et obture l'ouverture 26 de la colonne d'injection 22. Le poinçon 11 est en position haute, et la collerette 40 est en position ouverte de manière à former l'espace de retrait 42. Lorsque le vide est réalisé dans la cavité et dans l'espace de retrait, la collerette se déplace le long de la surface latérale 12 du poinçon jusqu'à se retrouver en position fermée, comblant ainsi l'espace de retrait 42. La collerette obstrue la rainure afin d'empêcher l'entrée de l'air via le canal 13 dans la cavité 7 lors des étapes ultérieures du procédé. En position fermée, la surface inférieure 41 de la collerette 40 est située au même niveau que la surface inférieure 15 du poinçon, de sorte que lesdites surfaces inférieures de la collerette et du poinçon constituent une surface de compression 14. La collerette est ensuite fixée au poinçon, devenant solidaire dudit poinçon, afin de garantir l'étanchéité de la cavité.

La résine 50 est ensuite injectée dans la cavité 7 du moule 2 afin d'imprégner le substrat fibreux 51 placé préalablement dans ladite cavité. Durant l'injection de la résine, le poinçon 11 reste en position haute et la collerette reste en position fermée. De manière analogue au premier mode de réalisation, la résine est injectée via le premier canal 23 de la tête d'injection, s'écoule le long de la colonne d'injection, puis entre en contact avec le substrat fibreux dans la cavité.

De manière analogue au premier mode de réalisation précédent, lorsque la quantité de résine souhaitée a été injectée dans la cavité du moule, le piston 30 est déplacé en position fermée afin d'obturer l'ouverture 26 de la portion de colonne d'injection 25. En position fermée, l'évidement 31 du piston 30 forme avec la paroi de la tête d'injection, le premier canal 23, et le deuxième canal 24, un circuit de recirculation de la résine. Lors de l'étape de nettoyage, la résine 50 circule dans le premier canal d'injection 23, circule dans la colonne d'injection dans l'évidement du piston, et sort de ladite colonne via le deuxième canal 24 permettant l'évacuation de la résine.

Après nettoyage, la partie mobile 10 du dispositif de moulage se déplace le long de la paroi du moule jusqu'à atteindre une position basse, variable selon le type et le volume de résine injectée, de manière à ce que la surface de compression 14 vienne au contact de ladite résine injectée. La partie mobile compresse la résine, permettant un étalement maximal de la résine sur toute la surface du substrat fibreux 51, ainsi qu'une imprégnation optimale du substrat fibreux par ladite résine. L'étape de nettoyage peut être réalisée avant, pendant, ou après l'étape de compression. De préférence, les étapes de nettoyage et de compression ont lieu simultanément.

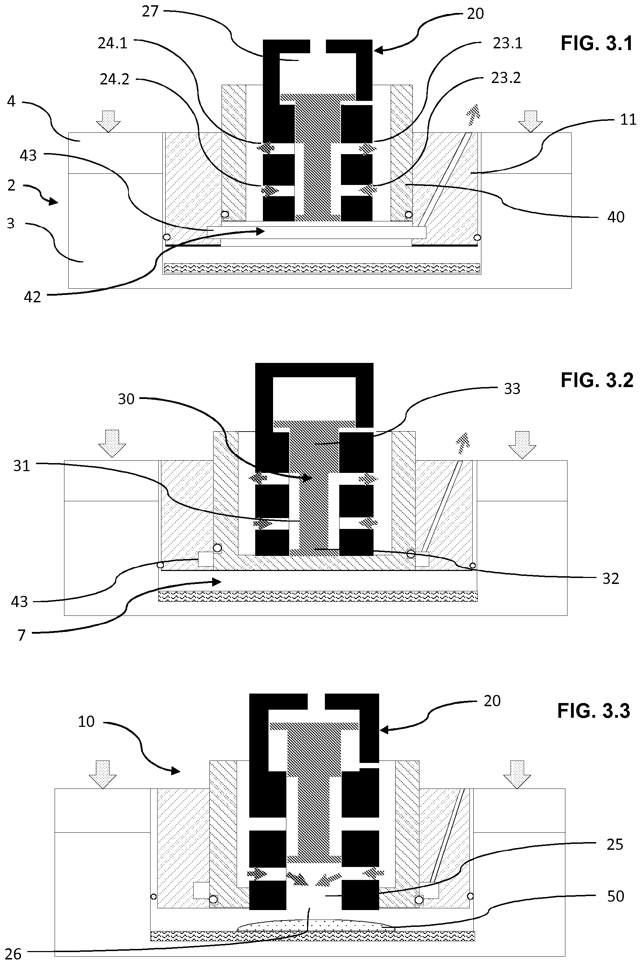

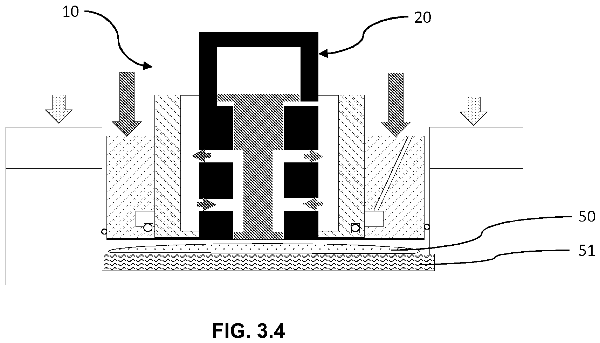

### Troisième mode de réalisation illustré par les figures 3.1, 3.2, 3.3, 3.4

Le dispositif de moulage comprend les éléments 2, 3, 4 et 11 décrits dans le deuxième mode de réalisation précédent, mais diffère en ce qui concerne la structure et le fonctionnement de la tête d'injection et du piston mobile dans ladite tête d'injection. Le dispositif de moulage est principalement destiné à l'injection de résine en bi-composant, mais permet également l'injection de résine en mono-composant.

En effet, la tête d'injection 20 dite « haute pression », peut être utilisée avec une pression d'injection de la résine généralement comprise entre 50 bars et 100 bars. Elle comporte, dans sa paroi 21, un premier canal inférieur 23.1 et un premier canal supérieur 23.2 situés à l'aplomb l'un de l'autre, ainsi qu'un deuxième canal inférieur 24.1 et un deuxième canal supérieur 24.2 situés à l'aplomb l'un de l'autre. Les premiers et deuxièmes canaux inférieurs sont opposés l'un par rapport à l'autre et se font face. De même, les premiers et deuxièmes canaux supérieurs sont opposés l'un par rapport à l'autre et se font face.

La tête d'injection 20 comporte en outre un piston hydraulique 30 comportant un évidement 31 sur une partie de sa longueur, ledit piston hydraulique étant apte à se déplacer la long de la colonne 22 de ladite tête d'injection entre au moins une première position, dite position ouverte, et une deuxième position, dite position fermée.

En position ouverte, l'extrémité inférieure 32 du piston, la paroi 21 de la tête d'injection, et l'ouverture 26 de la colonne délimitent une portion de colonne 25 destinée notamment à accueillir une résine polymère avant d'être injectée dans la cavité 7.

En position fermée, l'ouverture de la colonne 26 est obturée par l'extrémité inférieure 32 du piston. De plus, l'évidement 31 prévu sur une partie du piston hydraulique et les canaux supérieur et inférieur forment des circuits de circulation de résine polymère. Un premier circuit est formé par l'évidement 31 du piston, le premier canal inférieur 23.1, et le premier canal supérieur 23.2. Un deuxième circuit est formé par l'évidement 31 du piston, le deuxième canal inférieur 24.1, et le deuxième canal supérieur 24.2.

Comme décrit précédemment, le piston 30 est un piston hydraulique permettant l'injection de la résine polymère sous haute pression. Afin de pouvoir appliquer une telle pression sur le piston, la tête d'injection comporte un espace 27 apte à accueillir l'extrémité supérieure 33 du piston.

Le tirage du vide est effectué de manière analogue au deuxième mode de réalisation, via un canal 13 situé dans le poinçon de la partie mobile, dont une extrémité débouche dans la chambre constituée de l'espace de retrait 42, en particulier dans la rainure périphérique 43 de l'espace de retrait communiquant avec la cavité 7 par une ouverture 44, et l'autre extrémité débouche sur l'extérieur du poinçon et est raccordée à un système de tirage du vide tel qu'une pompe à vide par exemple.

Lors de l'étape de tirage du vide, le piston est en position fermée et obture l'ouverture 26 de la colonne d'injection. Le poinçon 11 est en position haute, et la collerette 40 est en position ouverte de manière à former l'espace de retrait 44. Les composants A et B sont en recirculation dans la tête d'injection, respectivement dans le premier circuit et dans le deuxième circuit. Le débit de recirculation des composants A et B est ajusté de manière à permettre un mélange optimal desdits composants sous haute pression lors de l'étape ultérieure d'injection de la résine. En particulier, le débit de recirculation des composants A et B peut être égal ou différent du débit d'injection de la résine lors de l'étape ultérieure d'injection de la résine.

Lorsque le vide est réalisé dans la cavité et dans l'espace de retrait, la collerette 40 se déplace le long de la surface latérale 12 du poinçon jusqu'à se retrouver en position fermée, comblant ainsi l'espace de retrait 42. La collerette obstrue la rainure 43 afin d'empêcher l'entrée de l'air via le canal 13 dans la cavité 7 lors des étapes ultérieures du procédé. En position fermée, la surface inférieure 41 de la collerette est située au même niveau que la surface inférieure 15 du poinçon, de sorte que lesdites surfaces inférieures de la collerette et du poinçon forment une surface de compression 14. La collerette est ensuite fixée au poinçon, devenant solidaire dudit poinçon, afin de garantir l'étanchéité de la cavité.

La résine 50 est ensuite injectée dans la cavité 7 du moule afin d'imprégner le substrat fibreux 51 placé préalablement dans ladite cavité. Lors de l'étape d'injection de la résine, le piston 30 est en position ouverte, le premier canal inférieur 23.1 et le deuxième canal inférieur 24.1 débouchant ainsi dans la portion de colonne 25.

Les composants A et B sont injectés respectivement via le premier canal inférieur et le deuxième canal inférieur dans la portion de colonne où ils entrent en contact l'un avec l'autre sous haute pression. La pression d'injection et le débit d'injection des composants A et B peuvent être choisis égaux ou différents de la pression de recirculation et du débit de recirculation desdits composants A et B.

La mise en contact des composants A et B dans la portion de colonne sous haute pression et avec un débit élevé permet d'obtenir un mélange homogène desdits composants, et ainsi une résine polymère homogène, afin de réaliser une imprégnation optimale du substrat fibreux.

Lorsque la quantité de résine souhaitée a été injectée dans la cavité du moule, le piston 30 est déplacé en position fermée afin d'obturer l'ouverture 26 de la portion de colonne d'injection. Les composants A et B sont alors en recirculation dans la tête d'injection, respectivement dans le premier circuit et dans le deuxième circuit, comme lors de l'étape de tirage du vide.

Après recirculation de la résine, la partie mobile 10 du dispositif de moulage se déplace le long de la surface latérale 5 du moule jusqu'à atteindre une position basse, variable selon le type et le volume de résine injectée, de manière à ce que la surface de compression 14 vienne au contact de ladite résine injectée. La partie mobile compresse la résine, permettant un étalement maximal de la résine sur toute la surface du substrat fibreux, ainsi qu'une imprégnation optimale du substrat fibreux par ladite résine. L'étape de recirculation de la résine peut être réalisée avant, pendant, ou après l'étape de compression. De préférence, les étapes de recirculation et de compression ont lieu simultanément.

L'injection peut être réalisée en mono-composant ou en bi-composant. En particulier, les composants A et B peuvent être identiques ou différents.

Les composants A et B peuvent également être différents et constitués chacun d'une résine polymère différente, aboutissant à une injection en bi-composant de deux résines polymères différentes.

L'injection peut être réalisée en multi-composant, c'est-à-dire avec un nombre de composants supérieur ou égal à 2, le nombre de canaux inférieurs et supérieurs ainsi que le nombre de circuits de recirculation de résine étant adaptés en conséquence.

De manière alternative, il est également possible de n'injecter, en mono-composant, que le composant A ou que le composant B, chacun étant constitué d'une résine polymère.

### PROCEDE DE FABRICATION DE PIECE STRUCTUREE OU SEMI-STRUCTUREE EN MATERIAU COMPOSITE.

Le dispositif de moulage décrit permet la fabrication de pièce structurée ou semi-structurée en matériau composite. Les pièces sont obtenues comme décrit avec les différents modes de réalisation par moulage à partir de résine polymère, notamment d'une ou plusieurs résines polymères thermoplastiques ou thermodurcissable, et d'un substrat fibreux. Ces résines polymères peuvent aussi être appelées pré-polymères car elles sont les précurseurs de la matrice polymère du matériau composite obtenue après leur polymérisation dans le dispositif de moulage utilisé dans le procédé de moulage.

Le procédé comprend plus particulièrement les étapes de :
- positionnement d'un substrat fibreux 51 sur le fond 6 de la cavité 7 du dispositif de moulage. Le moule 2 du dispositif de moulage est en position ouverte pour permettre le positionnement du substrat fibreux dans la cavité dudit moule. Le dispositif de moulage est ensuite fermé par mise en contact des parties supérieure 4 et inférieure 3 dudit dispositif de moulage puis par pression de ladite partie supérieure contre ladite partie inférieure au moyen d'un système de fermeture tel qu'une presse par exemple, ou tout autre système de fermeture de dispositif de moulage couramment utilisé dans l'industrie.

- mise sous vide de la cavité 7, ou tirage du vide dans la cavité, via le canal prévu à cet effet. Le canal de tirage du vide est situé dans la partie mobile du dispositif de moulage et débouche sur la chambre 25 ou 40 qui communique avec la cavité 7. Le canal de tirage du vide est destiné à être raccordé à un système de tirage du vide tel qu'une pompe à vide par exemple, pour la réalisation de l'étape de tirage du vide dans la cavité. Ainsi, à l'issue de l'étape de tirage sous vide, le vide est fait dans la chambre et dans la cavité.
- imprégnation du substrat fibreux, préalablement positionné dans la cavité 7 du dispositif de moulage, par la résine polymère, en mono-composant ou en multi-composant, en particulier en bi-composant.

L'étape d'imprégnation comprend une étape d'injection de la résine dans la cavité puis une étape de compression de ladite résine et du substrat fibreux.

L'injection de la résine est effectuée via le canal d'injection situé dans la partie mobile 10, qui est le même que celui utilisé précédemment pour le tirage du vide dans le cas du premier mode de réalisation. Ce canal est prévu dans la paroi de la tête d'injection 20, et comporte une extrémité débouchant sur la colonne d'injection 22, et une autre extrémité débouchant sur l'extérieur de la tête d'injection. Une quantité prédéterminée de résine 51 est injectée via le canal, transite dans la tête d'injection, puis vient se loger dans la cavité, entrant au contact du substrat fibreux 51 pour former un matériau composite. On obtient, après polymérisation de la résine, une résine polymérisée constituant la matrice polymère du matériau composite.

Le procédé de moulage mis en oeuvre par le dispositif de moulage selon l'invention permet d'obtenir un volume de la cavité 7 invariant entre l'étape de tirage du vide, et l'étape d'injection de la résine 50. Le dispositif de moulage proposé permet également d'obtenir une pression invariante ou quasi-invariante entre l'étape de tirage du vide, et l'étape d'injection de la résine. Par pression quasi-invariante, on entend une variation négligeable de pression dans la cavité, ainsi que des conséquences négligeables de ladite variation de pression sur la qualité des pièces en matériau composite obtenues.

En effet, dans le premier mode de réalisation, la position du poinçon 11 ne varie pas entre le tirage du vide et l'injection de la résine. Dans les deuxième et troisième modes de réalisation, le poinçon reste fixe et seule la collerette 40 se déplace de la position ouverte à la position fermée, venant combler la chambre constituée de l'espace de retrait 42. L'augmentation de pression dans la cavité 7 due au déplacement de la collerette est négligeable, étant donné que le ratio de la surface de l'ouverture 26 de l'espace de retrait sur la surface totale de la cavité, et ainsi de la surface de pièce obtenue, est inférieur à 5%.

Le dispositif de moulage pour la fabrication de pièces en matériau composite selon les deuxième et troisième modes de réalisation de l'invention, permet également d'obtenir une surface de tirage de vide très importante, et un ainsi de générer un vide supérieur à 100 mbar, de préférence supérieur à 50 mbar, en un temps inférieur à 10 secondes, de préférence inférieur 5 à secondes. On entend par un vide très important une pression dans la moule et préférablement dans la cavité inferieur à 100mbar de préférence inferieur à 50mbar.

Un tel dispositif de moulage permet par conséquent d'obtenir des pièces en matériau composite avec un nombre de défaut et/ou d'imperfection réduit, et une imprégnation optimale du substrat fibreux par la résine polymère.

### SUBSTRAT FIBREUX

Concernant le substrat fibreux, ledit substrat a de préférence une dimension correspondant à la dimension de la cavité de moulage, de sorte que ledit substrat fibreux recouvre entièrement ou presque entièrement le fond de ladite cavité de moulage.

Le substrat fibreux comprend de préférence des fibres longues, et dont le rapport L/D (rapport de la longueur par le diamètre) est supérieur à 1000, de préférence supérieur à 2000, avantageusement supérieur à 3000, plus avantageusement supérieur à 5000, encore plus avantageusement supérieur à 6000, encore plus avantageusement supérieur à 7500, et de la manière la plus avantageuse supérieur à 10000.

### LES FIBRES

Les fibres du substrat peuvent être continues et présentes sous forme d'assemblage qui peut être une préforme. Elles peuvent se présenter sous forme de renfort unidirectionnel (UD) ou multidirectionnel (2D, 3D). En particulier, elles peuvent être sous forme de tissus, d'étoffes, de nappes, de bandes ou de tresses et peuvent également être coupées par exemple sous forme de non tissés (mats) ou sous forme de feutres.

Les fibres du substrat ont un diamètre compris entre 0.005 µm et 100 µm, de préférence entre 1 µm et 50 um, plus préférablement entre 3 um et 30 um, et avantageusement entre 5 um et 25 µm.

Les fibres du substrat peuvent être choisies parmi :
- les fibres minérales, celles-ci ayant de préférence des températures de fusion Tf élevées et supérieures aux températures de mise en oeuvre,
- les fibres polymériques ou de polymère, de préférence ayant une température de fusion Tf' ou à défaut de Tf', une température de transition vitreuse Tg', bien supérieure aux températures de mise en oeuvre,
- ou les mélanges des fibres citées plus haut.

Plus particulièrement, les fibres peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme A1203, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
   - les fibres de polymères thermoplastiques et plus particulièrement choisies parmi: le polyéthylène téréphtalate (PET), le polybutylène téréphtalate (PBT),
   - les fibres de polyamides,
   - les fibres d'aramides (comme le Kevlar(R)) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
   - les fibres de copolymères blocs de polyamide tels que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort préférées sont des fibres longues choisies parmi les : fibres de carbone y compris métallisées, fibres de verre y compris métallisées de type E, R, S2, fibres d'aramides (comme le Kevlar(R)) ou de polyamides aromatiques, les fibres de polyaryléthers cétones (PAEK) telles que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar(R)) ou leurs mélanges.

Lesdites fibres peuvent représenter des taux de 40% à 70% en volume, de préférence de 45% à 70% en volume et de manière encore plus préféré de 50% à 65% en volume dudit matériau composite.

L'assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m², de préférence de 150 à 900 g/m² et de manière encore plus préféré 200 à 700 g/m².

### LA RESINE POLYMERE

On injecte dans le dispositif de moulage 1 la résine polymère illustrée par la référence 50 sur les figures.

Par résine polymère, on entend ici, une composition chimique liquide visqueuse comprenant des composants comportant des groupements réactifs. Une telle résine, lorsqu'elle est injectée dans le dispositif de moulage 1, permet par imprégnation du substrat fibreux 51 et polymérisation ultérieure de ladite résine, formant alors une résine polymérisée, d'obtenir une pièce en matériau composite pour des applications variées, par exemple le domaine ferroviaire, aéronautique, ou encore la construction et le bâtiment.

Les résines utilisées sont les résines réactives, permettant une polymérisation in-situ. Ces résines sont liquides, avec une viscosité inférieure ou égale à 10.000 mPa.s à une certaine température inférieure ou égale à 300 °C.

L'injection d'une résine polymère peut être réalisée en mono-composant selon le premier et le deuxième mode de réalisation, ou en multi-composant, et en particulier en bi-composant selon troisième mode de réalisation.

La résine comprend un sirop comprenant au moins un polymère ou oligomère pouvant être ou non réactif, et au moins un monomère ou un allongeur de chaîne apte à réagir avec ledit monomère ou oligomère si ledit polymère ou oligomère est réactif. La résine comprend également au moins un amorceur ou catalyseur destiné à réagir avec le monomère ou l'allongeur de chaîne pour démarrer la polymérisation.

En particulier, la polymérisation de la résine peut être une polymérisation par voie radicalaire, ou une polyaddition ou polycondensation.

### Dans le cas d'une injection en mono-composant :

- Par voie radicalaire : la résine comprend un sirop comprenant au moins un polymère ou oligomère pouvant être ou non réactif, et au moins un monomère. La résine comprend également au moins un amorceur destiné à réagir avec le monomère et/ou le polymère ou oligomère, si ledit polymère ou oligomère est réactif, pour démarrer la polymérisation.
- Par polyaddition ou polycondensation : la résine comprend un sirop comprenant au moins un polymère ou oligomère réactif. La résine comprend également au moins un allongeur de chaine destiné à réagir avec le polymère ou oligomère réactif, pour démarrer la polymérisation.

L'injection de résine en mono-composant peut être mise en oeuvre avec les trois modes de réalisation du dispositif de moulage de l'invention et plus avantageusement avec les premiers et deuxièmes modes.

Les résines utilisées pour une injection en mono-composant comprennent :
- Les résines thermodurcissables polyester, composées de polymères polyesters insaturées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le styrène, mais peut également comprendre d'autres monomères vinyliques, tels que des monomères (méth)acryliques, en combinaison ou non avec le styrène.
- Les résines thermodurcissables vinyl-ester, composées de polymères époxydes méthacrylées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le styrène, mais peut également comprendre d'autres monomères vinyliques, tels que des monomères (méth)acryliques en combinaison ou non avec le styrène.
- Les résines thermodurcissables acryliques, composées de polymères uréthane (méth)acrylées ou polyester (méth)acrylées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le méthacrylate de méthyle, mais peut également comprendre d'autres monomères vinyliques, tels que le styrène ou des monomères (méth)acryliques en combinaison ou non avec le méthacrylate de méthyle.
- Les mélanges des trois types de résines décrits ci-dessus.
- Les résines thermoplastiques acryliques composées d'au moins un polymère et d'au moins un monomère, et un amorceur destiné à démarrer la polymérisation dudit au moins un monomère. Le ou les monomères sont polymérisables par voie radicalaire, la polymérisation étant amorcée par un amorceur tel qu'un peroxyde par exemple, avec ou sans accélérateur. Le monomère réactif est généralement le méthacrylate de méthyle, mais peut également comprendre d'autres monomères vinyliques, tels que des monomères (méth)acryliques, en combinaison ou non avec le méthacrylate de méthyle.
- Les résines thermoplastiques polyamides (PA et PAHT), telles que celles décrites dans les documents EP 1191050 et EP 2586585 incorporés par référence. Notamment et à titre d'exemple, on peut citer les résines thermoplastiques polyamides comprenant au moins un monomère lactame, tels que le β,β-diméthylpropriolactame, le α,α-diméthylpropriolactame, l'amylolactame, le caprolactame, le capryllactame et le lauryllactame.

### Dans le cas d'une injection dite en bi-composant :

- Par voie radicalaire : la résine comprend un composant A constitué d'un sirop comprenant au moins un polymère ou oligomère pouvant être ou non réactif, et au moins un monomère. La résine comprend également un composant B comprenant au moins un amorceur destiné à réagir avec le monomère et/ou le polymère ou oligomère, si ledit polymère ou oligomère est réactif, pour démarrer la polymérisation.
- Par polyaddition ou polycondensation : la résine comprend un composant A constitué d'un sirop comprenant au moins un polymère ou oligomère réactif. La résine comprend également un composant B comprenant au moins un allongeur de chaine destiné à réagir avec le polymère ou oligomère réactif, pour démarrer la polymérisation.

Les composants A et B sont mis en contact lors de l'injection de la résine polymère dans un dispositif de moulage, évitant ainsi une étape de conservation d'un mélange des composants A et B à basse température.

L'injection de résine en bi-composant peut être mise en oeuvre avec le troisième mode de réalisation du dispositif de moulage de l'invention.

Les résines utilisées pour une injection en multi-composant, en particulier en bi-composant comprennent :
- Les résines thermodurcissables polyester, composées de polymères polyesters insaturées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le styrène, mais peut également comprendre d'autres monomères vinyliques, tels que des monomères (méth)acryliques, en combinaison ou non avec le styrène.
- Les résines thermodurcissables vinyl-ester, composées de polymères époxydes méthacrylées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le styrène, mais peut également comprendre d'autres monomères vinyliques, tels que des monomères (méth)acryliques en combinaison ou non avec le styrène.
- Les résines thermodurcissables acryliques, composées de polymères uréthane (méth)acrylées ou polyester (méth)acrylées dilués dans un ou plusieurs monomères réactifs, en présence d'additifs. Le et/ou les polymères et monomères sont polymérisables par voie radicalaire, la polymérisation étant amorcée par un amorceur tel qu'un peroxyde par exemple, avec ou sans accélérateur. Le monomère réactif est généralement le méthacrylate de méthyle, mais peut également comprendre d'autres monomères vinyliques, tels que le styrène ou des monomères (méth)acryliques en combinaison ou non avec le méthacrylate de méthyle.
- Les mélanges des trois types de résines décrits ci-dessus.
- Les résines thermodurcissables polyuréthanes, à base de polymères ou oligomères ayant des fonctions isocyanates, en présence d'additifs et/ou de diluants. La polymérisation est effectuée par poly-addition ou poly-condensation d'un poly-ol ou d'une poly-amine, éventuellement en présence d'un accélérateur.
- Les résines thermodurcissables époxydes, à base de polymères ou oligomères ayant des fonctions époxydes, en présence d'additifs et/ou de diluants. La polymérisation est effectuée par poly-addition ou poly-condensation d'une poly-amine ou d'un anhydride, éventuellement en présence d'un accélérateur.
- Les résines thermoplastiques acryliques composées d'au moins un polymère et d'au moins un monomère, et un amorceur destiné à démarrer la polymérisation dudit au moins un monomère. Le ou les monomères sont polymérisables par voie radicalaire, la polymérisation étant amorcée par un amorceur tel qu'un peroxyde par exemple, avec ou sans accélérateur. Le monomère réactif est généralement le méthacrylate de méthyle, mais peut également comprendre d'autres monomères vinyliques, tels que des monomères (méth)acryliques, en combinaison ou non avec le méthacrylate de méthyle.
- Les résines thermoplastiques polyamides (PA et PAHT), telles que celles décrites dans les documents EP 1191050 et EP 2586585 incorporés par référence. Notamment et à titre d'exemple, on peut citer les résines thermoplastiques polyamides comprenant au moins un monomère lactame, tels que le β,β-diméthylpropriolactame, le α,α-diméthylpropriolactame, l'amylolactame, le caprolactame, le capryllactame et le lauryllactame.

### LES PIECES EN MATERIAU COMPOSITE.

Le dispositif de moulage et le procédé décrits précédemment permettent de réaliser une pièce en matériau composite, ou une pièce composite, structurée ou semi-structurée, en particulier une pièce ne comportant aucune carotte résiduelle de moulage et pouvant être utilisée après démoulage sans aucun traitement de finition.

Plus particulièrement, ladite pièce est " netshape " selon ce terme en anglais et courant dans le métier du moulage, ce qui signifie ne nécessitant aucun usinage ou finition particulière avant utilisation finale. Ceci est lié aux conditions spécifiques de fabrication et en particulier de moulage dans un moule fonctionnant sous vide et de ce fait sans aucun besoin d'évent qui d'habitude (quand il est présent) nécessite, au démoulage, l'élimination de la carotte formée liée à cet évent par un usinage et une finition supplémentaire. Ceci est une différence importante de structure finale et un avantage supplémentaire significatif par rapport à l'état de la technique dans ce domaine. En effet, le dispositif est adapté à la fabrication industrielle de pièces en matériaux composites structurées ou semi-structurées ; on obtient notamment un gain en productivité, pas de déchet et des pièces mécaniques sans défaut avec, en conséquence des caractéristiques mécaniques meilleures.

La pièce structurée ou semi-structurée ainsi obtenue peut être utilisée pour diverses applications finales, en particulier dans les domaines de l'automobile, du transport routier comme pièces pour camions, ferroviaire, maritime et aéronautique, photovoltaïque, solaire (thermique) en particulier composants de centrales solaires, de l'éolien, spatial, bâtiment et génie civil, mobilier et équipements urbains, signalisation, des sports et loisirs.

## Revendications

1. Dispositif de moulage (1) pour la fabrication de pièce en matériau composite structurée ou semi-structurée comprenant une résine polymère (50) et un substrat fibreux (51), **caractérisé en ce qu'**il comprend :
- un moule (2) comprenant un fond et une surface latérale, et une partie inférieure (3) et une partie supérieure (4) apte à venir au contact de ladite partie inférieure afin de fermer le moule,
- une partie mobile (10) apte à se déplacer le long de la surface latérale du moule, comprenant une surface de compression (14) formant avec le fond et la surface (5) latérale dudit moule (2) une cavité (7),
la partie mobile (10) comprenant un canal de tirage (13, 23) du vide débouchant dans une chambre (25, 42) située au-dessus de la cavité et communiquant avec ladite cavité (7), et **en ce que** la partie mobile (10) comprend en outre un poinçon (11) apte à se déplacer le long de la surface latérale du moule, et une tête d'injection (20), ladite tête d'injection étant munie d'une paroi (21) définissant une colonne d'injection (22) communiquant avec la cavité (7) par une ouverture(26) et **caractérisé en ce qu'**il comprend en outre un piston (30) comportant une partie inférieure (32) munie d'une surface inférieure, une partie supérieure (33), et un évidement (31), ledit piston étant apte à se déplacer le long de la colonne d'injection (22) entre au moins une première position dite position ouverte dans laquelle sa surface inférieure définit avec la paroi de la tête d'injection et l'ouverture, une portion inférieure de colonne d'injection, et au moins une deuxième position dans laquelle le piston obture l'ouverture de la colonne d'injection.

2. Dispositif de moulage selon la revendication 1, **caractérisé en ce que** le canal (23) de tirage du vide est constitué d'un premier canal traversant la paroi de la tête d'injection (20), et débouchant sur la chambre constituée de la portion inférieure (25) de colonne d'injection (22).

3. Dispositif de moulage selon la revendication 2, **caractérisé en ce que** le canal (23) de tirage du vide est également un canal d'injection de résine polymère (50).

4. Dispositif de moulage selon les revendications 1 à 3, **caractérisé en ce que** la tête d'injection (20) comprend en outre un deuxième canal (24) traversant la paroi de la tête d'injection, et permettant l'évacuation de la résine (50) de la colonne (22).

5. Dispositif de moulage selon les revendications 1 à 4, **caractérisé en ce qu'**en position fermée, le piston (30) forme au niveau de son évidement (31), avec la paroi de la tête d'injection, le premier canal (23), et le deuxième canal (24), un circuit de recirculation de la résine non injectée.

6. Dispositif de moulage selon la revendication 1, **caractérisé en ce que** la partie mobile (10) comprend en outre une collerette (40) apte à se déplacer le long de la surface latérale du poinçon (11), entre au moins une première position dite ouverte dans laquelle la surface inférieure de la collerette (40) définit avec la surface latérale du poinçon un espace de retrait (42) communiquant avec la cavité (7) par une ouverture (44), et au moins une deuxième position dite fermée dans laquelle la collerette obture ladite ouverture (44).

7. Dispositif de moulage selon la revendication 6, **caractérisé en ce que** l'espace de retrait (42) comprend une rainure (43) périphérique située dans le poinçon (30).

8. Dispositif de moulage selon les revendications 1, 6 et 7, **caractérisé en ce que** le canal de tirage du vide (13) est constitué d'un canal situé dans le poinçon et débouchant sur la chambre (42) constituée de l'espace de retrait, ou sur la rainure (43) périphérique dudit espace de retrait.

9. Dispositif de moulage selon les revendications 1, et 6 à 8, **caractérisé en ce que** la tête d'injection (20) comprend en outre au moins un premier canal (23) traversant sa paroi pour l'injection de la résine et au moins un deuxième canal (24) traversant sa paroi pour l'évacuation de la résine de la tête d'injection.

10. Dispositif de moulage selon les revendications 1 et 9, **caractérisé en ce que** le premier canal (23) et le deuxième canal (24) forment, avec l'évidement (31) du piston et la paroi (21) de la tête d'injection, un circuit de recirculation de la résine non injectée.

11. Dispositif de moulage selon la revendication 1, **caractérisé en ce que** la tête d'injection (20) comprend en outre, dans sa paroi, au moins un premier canal (23.1) inférieur pour l'injection de la résine et au moins un premier canal (23.2) supérieur pour l'évacuation de la résine de ladite tête d'injection, lesdits premiers canaux inférieur et supérieur étant positionnés à l'aplomb l'un de l'autre et formant, avec l'évidement du piston et la paroi de la tête d'injection, au moins un circuit de recirculation de la résine.

12. Dispositif de moulage selon la revendication 1, **caractérisé en ce que** la tête d'injection (20) comprend en outre, dans sa paroi, au moins un deuxième canal (24.1) inférieur pour l'injection de la résine et au moins un deuxième canal (24.2) supérieur pour l'évacuation de la résine de ladite tête d'injection, lesdits deuxièmes canaux inférieur et supérieur étant positionnés à l'aplomb l'un de l'autre et formant, avec l'évidement du piston et la paroi de la tête d'injection, au moins un circuit de recirculation de la résine.

13. Dispositif de moulage selon la revendication 1, **caractérisé en ce que** la tête d'injection (20) comprend, dans sa paroi, n canaux inférieurs pour l'injection de la résine et m canaux supérieurs pour l'évacuation de la résine de la colonne d'injection, n étant supérieur ou égal à 2, m étant supérieur ou égal à 2, n étant égal ou différent de m, de manière à former n circuits de recirculation de la résine si n est inférieur à m, ou m circuits de recirculation lorsque m est inférieur à n.

14. Dispositif de moulage selon la revendication 1, **caractérisé en ce que** la partie supérieure de la colonne d'injection (22) est constituée d'un espace (27) destiné à être mis sous pression, et apte à accueillir la partie supérieure du piston, ledit piston étant hydraulique, afin de permettre le déplacement dudit piston le long de la colonne d'injection.

15. Procédé de fabrication de pièce en matériau composite structurée ou semi-structurée comprenant une résine polymère et un substrat fibreux, **caractérisé en ce qu'**il est mis en oeuvre à l'aide d'un dispositif d'injection selon l'une quelconque des revendications 1 à 14, et comprenant les étapes suivantes :
- a) positionnement du substrat fibreux dans la cavité,
- b) tirage du vide dans la cavité via le canal de tirage du vide situé dans la partie mobile du dispositif de moulage,
- c) imprégnation du substrat fibreux par injection d'une quantité prédéterminée de résine polymère dans la cavité via le canal d'injection de la résine, puis compression de ladite résine par la partie mobile du dispositif de moulage.

16. Procédé de fabrication selon la revendication 15, **caractérisé en ce qu'**il comprend en outre une étape de nettoyage du ou des circuits de recirculation de la résine non injectée dans la cavité, ladite étape de nettoyage pouvant être réalisée avant, pendant, ou après l'étape de compression de la résine.

17. Procédé de fabrication selon la revendication 15, **caractérisé en ce qu'**il comprend en outre, préalablement à l'étape d'injection de la résine, une étape de fermeture de la chambre.

18. Procédé de fabrication selon la revendication 17, **caractérisé en ce que** l'étape de fermeture de la chambre consiste en l'obturation de l'ouverture de la portion inférieure de la colonne d'injection par la surface inférieure du piston, par déplacement dudit piston en position fermée.

19. Procédé de fabrication selon la revendication 17, **caractérisé en ce que** l'étape de fermeture de la chambre consiste en l'obturation de l'ouverture de l'espace de retrait par la surface inférieure de la collerette, par déplacement de ladite collerette en position fermée.

20. Procédé de fabrication d'une pièce selon l'une quelconque des revendications 15 à 19, utilisant un dispositif d'injection selon les revendications 1 à 10, **caractérisé en ce qu'**il permet l'injection en mono-composant de la résine polymère.

21. Procédé de fabrication d'une pièce selon l'une quelconque des revendications 15 à 19, utilisant un dispositif d'injection selon les revendications 11 à 14, **caractérisé en ce qu'**il permet l'injection en bi-composant de la résine polymère.

## Patentansprüche

1. Formungsvorrichtung (1) zur Herstellung eines strukturierten oder halbstrukturierten Teils aus Verbundmaterial, das ein Polymerharz (50) und ein faseriges Substrat (51) umfasst, **dadurch gekennzeichnet, dass** sie Folgendes umfasst:
- eine Form (2), die einen Boden und eine Seitenfläche und einen unteren Abschnitt (3) und einen oberen Abschnitt (4) umfasst, der geeignet ist, mit dem unteren Abschnitt in Kontakt zu treten, um die Form zu schließen,
- einen beweglichen Abschnitt (10), der geeignet ist, sich entlang der Seitenfläche der Form zu bewegen, der eine Kompressionsfläche (14) umfasst, die mit dem Boden und der Seitenfläche (5) der Form (2) eine Kavität (7) bildet,
wobei der bewegliche Abschnitt (10) einen Kanal zum Ziehen (13, 23) des Vakuums umfasst, der in einer Kammer (25, 42) mündet, die sich über der Kavität befindet und mit der Kavität (7) in Verbindung steht, und dadurch, dass der bewegliche Abschnitt (10) ferner eine Patrize (11), die geeignet ist, sich entlang der Seitenfläche der Form zu bewegen, und einen Einspritzkopf (20) umfasst, wobei der Einspritzkopf mit einer Wand (21) versehen ist, die eine Einspritzsäule (22) definiert, die mit der Kavität (7) über eine Öffnung (26) verbunden ist, und **dadurch gekennzeichnet, dass** sie ferner einen Kolben (30) umfasst, der einen unteren Abschnitt (32) mit einer unteren Fläche, einen oberen Abschnitt (33) und eine Ausnehmung (31) aufweist, wobei der Kolben geeignet ist, sich entlang der Einspritzsäule (22) zwischen wenigstens einer ersten, offenen Position, in der seine untere Fläche mit der Wand des Einspritzkopfes und der Öffnung einen unteren Einspritzsäulen-Teilbereich definiert, und wenigstens einer zweiten Position zu bewegen, in der der Kolben die Öffnung der Einspritzsäule verschließt.

2. Formungsvorrichtung nach Anspruch 1, **dadurch gekennzeichnet, dass** der Kanal (23) zum Ziehen des Vakuums von einem ersten Kanal gebildet ist, der die Wand des Einspritzkopfes (20) durchquert und an der Kammer mündet, die vom unteren Teilbereich (25) der Einspritzsäule (22) gebildet ist.

3. Formungsvorrichtung nach Anspruch 2, **dadurch gekennzeichnet, dass** der Kanal (23) zum Ziehen des Vakuums ebenfalls ein Kanal zur Einspritzung von Polymerharz (50) ist.

4. Formungsvorrichtung nach den Ansprüchen 1 bis 3, **dadurch gekennzeichnet, dass** der Einspritzkopf (20) ferner einen zweiten Kanal (24) umfasst, der die Wand des Einspritzkopfes durchquert und die Ableitung des Harzes (50) aus der Säule (22) ermöglicht.

5. Formungsvorrichtung nach den Ansprüchen 1 bis 4, **dadurch gekennzeichnet, dass** in geschlossener Position der Kolben (30) an seiner Ausnehmung (31) mit der Wand des Einspritzkopfes, dem ersten Kanal (23) und dem zweiten Kanal (24) einen Kreis zur Rückführung des nicht eingespritzten Harzes bildet.

6. Formungsvorrichtung nach Anspruch 1, **dadurch gekennzeichnet, dass** der bewegliche Abschnitt (10) ferner einen Kragen (40) umfasst, der geeignet ist, sich entlang der Seitenfläche der Patrize (11) zwischen wenigstens einer ersten, offenen Position, in der die untere Fläche des Kragens (40) mit der Seitenfläche der Patrize einen Rückzugsraum (42) bildet, der mit der Kavität (7) über eine Öffnung (44) in Verbindung steht, und wenigstens einer zweiten, geschlossenen Position zu bewegen, in der der Kragen die Öffnung (44) verschließt.

7. Formungsvorrichtung nach Anspruch 6, **dadurch gekennzeichnet, dass** der Rückzugsraum (42) eine umlaufende Rille (43) umfasst, die sich in der Patrize (30) befindet.

8. Formungsvorrichtung nach den Ansprüchen 1, 6 und 7, **dadurch gekennzeichnet, dass** der Kanal zum Ziehen des Vakuums (13) von einem Kanal gebildet ist, der sich in der Patrize befindet und an der Kammer (42), die von dem Rückzugsraum gebildet ist, oder an der umlaufenden Rille (43) des Rückzugsraums mündet.

9. Formungsvorrichtung nach den Ansprüchen 1 und 6 bis 8, **dadurch gekennzeichnet, dass** der Einspritzkopf (20) ferner wenigstens einen ersten Kanal (23), der seine Wand für die Einspritzung des Harzes durchquert, und wenigstens einen zweiten Kanal (24) umfasst, der seine Wand für die Ableitung des Harzes aus dem Einspritzkopf durchquert.

10. Formungsvorrichtung nach den Ansprüchen 1 und 9, **dadurch gekennzeichnet, dass** der erste Kanal (23) und der zweite Kanal (24) mit der Ausnehmung (31) des Kolbens und der Wand (21) des Einspritzkopfes einen Kreis zur Rückführung des nicht eingespritzten Harzes bilden.

11. Formungsvorrichtung nach Anspruch 1, **dadurch gekennzeichnet, dass** der Einspritzkopf (20) ferner in seiner Wand wenigstens einen ersten unteren Kanal (23.1) für die Einspritzung des Harzes und wenigstens einen ersten oberen Kanal (23.2) für die Ableitung des Harzes aus dem Einspritzkopf umfasst, wobei die ersten unteren und oberen Kanäle lotrecht zueinander positioniert sind und mit der Ausnehmung des Kolbens und der Wand des Einspritzkopfes wenigstens einen Kreis zur Rückführung des Harzes bilden.

12. Formungsvorrichtung nach Anspruch 1, **dadurch gekennzeichnet, dass** der Einspritzkopf (20) ferner in seiner Wand wenigstens einen zweiten unteren Kanal (24.1) für die Einspritzung des Harzes und wenigstens einen zweiten oberen Kanal (24.2) für die Ableitung des Harzes aus dem Einspritzkopf umfasst, wobei die zweiten unteren und oberen Kanäle lotrecht zueinander positioniert sind und mit der Ausnehmung des Kolbens und der Wand des Einspritzkopfes wenigstens einen Kreis zur Rückführung des Harzes bilden.

13. Formungsvorrichtung nach Anspruch 1, **dadurch gekennzeichnet, dass** der Einspritzkopf (20) in seiner Wand n untere Kanäle für die Einspritzung des Harzes und m obere Kanäle für die Ableitung des Harzes aus der Einspritzsäule umfasst, wobei n größer als oder gleich 2 ist, m größer als oder gleich 2 ist, n gleich oder verschieden von m ist, um n Kreise zur Rückführung des Harzes, wenn n kleiner als m ist, oder m Rückführungskreise, wenn m kleiner als n ist, zu bilden.

14. Formungsvorrichtung nach Anspruch 1, **dadurch gekennzeichnet, dass** der obere Abschnitt der Einspritzsäule (22) von einem Raum (27) gebildet ist, der dazu bestimmt ist, mit Druck beaufschlagt zu sein, und geeignet ist, den oberen Abschnitt des Kolbens aufzunehmen, wobei der Kolben hydraulisch ist, um die Bewegung des Kolbens entlang der Einspritzsäule zu ermöglichen.

15. Verfahren zur Herstellung eines strukturierten oder halbstrukturierten Teils aus Verbundmaterial, das ein Polymerharz und ein faseriges Substrat umfasst, **dadurch gekennzeichnet, dass** es mithilfe einer Einspritzvorrichtung nach einem der Ansprüche 1 bis 14 durchgeführt wird und die folgenden Schritte umfasst:
a) Positionieren des faserigen Substrats in der Kavität,
b) Ziehen des Vakuums in der Kavität über den Kanal zum Ziehen des Vakuums, der sich im beweglichen Abschnitt der Formungsvorrichtung befindet,
c) Imprägnieren des faserigen Substrats durch Einspritzung einer vorbestimmten Menge von Polymerharz in die Kavität über den Harzeinspritzkanal, dann Komprimieren des Harzes durch den beweglichen Abschnitt der Formungsvorrichtung.

16. Formungsvorrichtung nach Anspruch 15, **dadurch gekennzeichnet, dass** sie ferner einen Schritt des Reinigens des oder der Kreise zur Rückführung des nicht in die Kavität eingespritzten Harzes umfasst, wobei der Schritt des Reinigens vor, während oder nach dem Schritt des Komprimierens des Harzes durchgeführt werden kann.

17. Herstellungsverfahren nach Anspruch 15, **dadurch gekennzeichnet, dass** es ferner vor dem Schritt des Einspritzens des Harzes einen Schritt des Schließens der Kammer umfasst.

18. Herstellungsverfahren nach Anspruch 17, **dadurch gekennzeichnet, dass** der Schritt des Schließens der Kammer im Verschließen der Öffnung des unteren Teilbereichs der Einspritzsäule mittels der unteren Fläche des Kolbens durch Bewegung des Kolbens in die geschlossene Position besteht.

19. Herstellungsverfahren nach Anspruch 17, **dadurch gekennzeichnet, dass** der Schritt des Schließens der Kammer im Verschließen der Öffnung des Rückzugsraums mittels der unteren Fläche des Kragens durch Bewegung des Kragens in die geschlossene Position besteht.

20. Verfahren zur Herstellung eines Teils nach einem der Ansprüche 15 bis 19 unter Verwendung einer Einspritzvorrichtung nach den Ansprüchen 1 bis 10, **dadurch gekennzeichnet, dass** es die Monokomponenten-Einspritzung des Polymerharzes ermöglicht.

21. Verfahren zur Herstellung eines Teils nach einem der Ansprüche 15 bis 19 unter Verwendung einer Einspritzvorrichtung nach den Ansprüchen 11 bis 14, **dadurch gekennzeichnet, dass** es die Bikomponenten-Einspritzung des Polymerharzes ermöglicht.

## Claims

1. Moulding device (1) for manufacturing structured or semistructured composite components comprising a polymer resin (50) and a fibrous substrate (51), **characterized in that** it comprises:
- a mould (2) comprising a bottom and a lateral surface, and a lower part (3) and an upper part (4) that is able to come into contact with said lower part in order to close the mould,
- a movable part (10) that is able to move along the lateral surface of the mould, comprising a compression surface (14) that forms a cavity (7) with the bottom and the lateral surface (5) of said mould (2),
the movable part (10) comprising a vacuum-drawing channel (13, 23) that opens into a chamber (25, 42) that is located above the cavity and communicates with said cavity (7), and **in that** the movable part (10) further comprises a punch (11) that is able to move along the lateral surface of the mould, and an injection head (20), said injection head being provided with a wall (21) defining an injection column (22) that communicates with the cavity (7) by way of an opening (26) and **characterized in that** it further comprises a piston (30) comprising a lower part (32) provided with a lower surface, an upper part (33), and a recess (31), said piston being able to move along the injection column (22) between at least one first position called the open position, in which its lower surface defines, with the wall of the injection head and the opening, a lower portion of the injection column, and at least one second position in which the piston blocks the opening in the injection column.

2. Moulding device according to Claim 1, **characterized in that** the vacuum-drawing channel (23) consists of a first channel that passes through the wall of the injection head (20) and opens into the chamber consisting of the lower portion (25) of the injection column (22).

3. Moulding device according to Claim 2, **characterized in that** the vacuum-drawing channel (23) is also a channel for injecting polymer resin (50).

4. Moulding device according to Claims 1 to 3, **characterized in that** the injection head (20) further comprises a second channel (24) that passes through the wall of the injection head and allows evacuation of the resin (50) from the column (22).

5. Moulding device according to Claims 1 to 4, **characterized in that**, in the closed position, the piston (30) forms, at its recess (31), with the wall of the injection head, the first channel (23), and the second channel (24), a circuit for recirculating uninjected resin.

6. Moulding device according to Claim 1, **characterized in that** the movable part (10) further comprises a collar (40) that is able to move along the lateral surface of the punch (11), between at least one first position, called the open position, in which the lower surface of the collar (40) defines, with the lateral surface of the punch, a shrinkage space (42) that communicates with the cavity (7) by way of an opening (44), and at least one second position, called the closed position, in which the collar blocks said opening (44).

7. Moulding device according to Claim 6, **characterized in that** the shrinkage space (42) comprises a peripheral groove (43) located in the punch (30).

8. Moulding device according to Claims 1, 6 and 7, **characterized in that** the vacuum-drawing channel (13) consists of a channel that is located in the punch and opens into the chamber (42) consisting of the shrinkage space, or into the peripheral groove (43) of said shrinkage space.

9. Moulding device according to Claims 1, and 6 to 8, **characterized in that** the injection head (20) further comprises at least one first channel (23) passing through its wall for injecting the resin and at least one second channel (24) passing through its wall for evacuating the resin from the injection head.

10. Moulding device according to Claims 1 and 9, **characterized in that** the first channel (23) and the second channel (24) form, with the recess (31) of the piston and the wall (21) of the injection head, a circuit for recirculating uninjected resin.

11. Moulding device according to Claim 1, **characterized in that** the injection head (20) further comprises, in its wall, at least one first lower channel (23.1) for injecting the resin and at least one first upper channel (23.2) for evacuating the resin from said injection head, said first lower and upper channels being positioned vertically in line with one another and forming, with the recess of the piston and the wall of the injection head, at least one resin recirculating circuit.

12. Moulding device according to Claim 1, **characterized in that** the injection head (20) further comprises, in its wall, at least one second lower channel (24.1) for injecting the resin and at least one second upper channel (24.2) for evacuating the resin from said injection head, said second lower and upper channels being positioned vertically in line with one another and forming, with the recess of the piston and the wall of the injection head, at least one resin recirculating circuit.

13. Moulding device according to Claim 1, **characterized in that** the injection head (20) comprises, in its wall, n lower channels for injecting the resin and m upper channels for evacuating the resin from the injection column, n being greater than or equal to 2, m being greater than or equal to 2, n being equal to or different from m, so as to form n resin recirculating circuits if n is less than m, or m recirculating circuits when m is less than n.

14. Moulding device according to Claim 1, **characterized in that** the upper part of the injection column (22) consists of a space (27) that is intended to be pressurized and is able to receive the upper part of the piston, said piston being hydraulic, in order to allow said piston to move along the injection column.

15. Method for manufacturing structured or semistructured composite components comprising a polymer resin and a fibrous substrate, **characterized in that** it is carried out with the aid of an injecting device according to any one of Claims 1 to 14 and comprises the following steps:
- a) positioning the fibrous substrate in the cavity,
- b) drawing a vacuum in the cavity via the vacuum-drawing channel located in the movable part of the moulding device,
- c) impregnating the fibrous substrate by injecting a predetermined amount of polymer resin into the cavity via the resin injecting channel, then compressing said resin with the movable part of the moulding device.

16. Manufacturing method according to Claim 15, **characterized in that** it further comprises a step of cleaning the one or more circuits for recirculating uninjected resin in the cavity, said cleaning step being able to be carried out before, during, or after the resin compression step.

17. Manufacturing method according to Claim 15, **characterized in that** it further comprises, prior to the resin injection step, a step of closing the chamber.

18. Manufacturing method according to Claim 17, **characterized in that** the step of closing the chamber consists of blocking the opening in the lower portion of the injection column with the lower surface of the piston, by moving said piston into the closed position.

19. Manufacturing method according to Claim 17, **characterized in that** the step of closing the chamber consists of blocking the opening in the shrinkage space with the lower surface of the collar, by moving said collar into the closed position.

20. Method for manufacturing a component according to any one of Claims 15 to 19, using an injecting device according to Claims 1 to 10, **characterized in that** it allows single-component injection of the polymer resin.

21. Method for manufacturing a component according to any one of Claims 15 to 19, using an injecting device according to Claims 11 to 14, **characterized in that** it allows two-component injection of the polymer resin.
